## Europäisches Patentamt
## European Patent Office
## Office européen des brevets

(11) Numéro de publication: **0 254 656**
**A2**

# (12) DEMANDE DE BREVET EUROPEEN

(21) Numéro de dépôt: **87440044.3**

(22) Date de dépôt: **22.07.87**

(51) Int. Cl.⁴: **C 11 D 13/18**
**B 29 C 47/56, B 30 B 11/24**

(30) Priorité: **22.07.86 FR 8610611**

(43) Date de publication de la demande:
**27.01.88 Bulletin 88/04**

(84) Etats contractants désignés:
**AT BE CH DE ES GB GR IT LI LU NL SE**

(71) Demandeur: **SAVCO S.A.R.L.**
**Etrabonne**
**F-25170 Recologne (FR)**

(72) Inventeur: **Besnus, Jean-Louis**
**6 Rue Adolphe Focillon**
**F-75014 Paris (FR)**

(74) Mandataire: **Arbousse-Bastide, Jean-Claude**
**CABINET ARBOUSSE BASTIDE 20, rue de Copenhague**
**F-67000 Strasbourg (FR)**

(54) Procédé pour la production de pains de détergent à motifs incrustés dans la masse.

(57) Procédé et appareil pour la production en continu de bondons de détergents constitués par la réunion d'au moins deux bondons primaires de couleurs différentes.

L'appareil comprend au moins deux extrudeuses (2) acheminant les pâtes de détergents, au travers de grilles perforées (9), dans des buses de convergence (5) prolongées par au mois une buse (7) assurant la juxtaposition des bondons primaires avant leur passage à travers la filière (23) de sortie du bondon final.

Le procédé et l'appareil selon l'invention permettent d'obtenir des pains de détergent à motifs incrustés dans la masse, ces motifs y demeurant présents tout au long de leur utilisation.

EP 0 254 656 A2

# Description

## PROCEDE POUR LA PRODUCTION DE PAINS DE DETERGENT A MOTIFS INCRUSTES DANS LA MASSE

La présente invention a pour objet un procédé et un appareil pour la production en continu d'un bondon de détergent constitué par la réunion de plusieurs bondons primaires et conduisant à l'obtention d'un nouveau type de savon à motifs colorés.

On connaît déjà des savons à plusieurs couleurs dans lesquels les couleurs sont le plus souvent mélangées, constituant un marbrage généralement superficiel, qui disparaît peu à peu au cours de l'utilisation du savon.

On connaît également des savons présentant un motif imprimé dans la masse, ce motif pouvant être soit un élément décoratif soit une marque ou un sigle. Toutefois, ces motifs sont généralement de même couleur que le savon et ils disparaissent également au cours de son utilisation.

La présente invention permet d'obtenir des savons qui présentent la particularité tout à fait nouvelle de comporter des motifs colorés aux contours précis, insérés dans la totalité de la masse du savon, où ils demeurent présents tout au long de son utilisation.

La présente invention a ainsi pour premier objet un procédé pour la production en continu d'un bondon de détergent constitué soit par la juxtaposition de plusieurs bondons primaires de couleurs différentes, soit par l'insertion de l'un dans l'autre, sans mélange des couleurs à leur zone de contact.

Les détergents mis en oeuvre dand le procédé selon l'invention peuvent être soit des savons, c'est-à-dire les sels alcalins d'acides gras à longues chaînes, soit des détergents synthétiques comme les sels d'acides alkyl sulfuriques, alkylaryl sulfoniques, alcanesulfoniques ou les sels d'acides gras sulfonés à longues chaînes. La nature du détergent n'importe que dans la mesure où il est extrudable.

La présente invention a également pour objet un appareil permettant la mise en oeuvre du procédé selon l'invention.

L'appareil selon l'invention comprend au moins deux extrudeuses à vis d'Archimède dans lesquelles la pâte de détergent se trouve acheminée et expulsée, au travers de grilles constituées de plaques perforées, à l'intérieur de buses de convergence dont la face interne est munie d'une rampe spiralée à plusieurs filets, chaque grille supportant, à l'intérieur desdites buses, un pièce conique dont la face externe est également munie d'une rampe spiralée à plusieurs filets, lesdites buses de convergence étant prolongées par au moins une buse assurant la juxtaposition des bondons primaires ou leur incrustation l'un dans l'autre, sans amalgame des uns avec les autres à leurs zones de contacts.

L'homogénéisation des pâtes de détergent mises en oeuvre se trouve avantageusement assurée par une accentuation du mouvement tourbillonnaire desdites pâtes dans les buses de convergence, grâce à une orientation particulière des rampes spiralées situées à l'intérieur des buses par rapport à celles dont sont munis les cônes fixés sur les grilles d'entrée desdites buses, la spirale de chaque buse de convergence se trouvant à l'inverse de celle de la pièce conique correspondante.

Dans le même but d'assurer l'homogénéisation parfaite des pâtes de détergent, le perçage des trous des grilles est réalisé obliquement et orienté vers le premier filet de chaque rampe spiralée, de façon que les cordons pâteux sortant de chaque trou progressent le long desdites rampes avant de se mélanger sous l'effet combiné de la pesanteur et de la poussée engendrée par les extrudeuses.

Dans un premier mode de réalisation de l'appareil selon l'invention, les buses de convergence sont prolongées par une buse unique assurant le calibrage du bondon final et équipée de lames permettant le lissage des faces de contact des bondons primaires avant leur assemblage.

Dans un second mode de réalisation de l'appareil selon l'invention, les buses de convergence sont prolongées par une buse dite buse principale munie d'une double paroi à l'intérieur de laquelle on admet un liquide chaud tel que de l'huile, le chauffage de cette huile étant réalisé par tout moyen approprié, par exemple à l'aide d'une canne chauffante électrique. Ce dispositif permet de réchauffer les bondons de détergent de manière à les ramollir et assurer par là leur parfaite cohésion au moment de leur réunion, en évitant ainsi la dislocation ultérieure du pain de savon.

Dans un troisième mode de réalisation de l'appareil selon l'invention, avantageusement mis en oeuvre pour la production de savons à motifs incrustés, la buse principale est prolongée, au bout de la buse de convergence centrale, par une buse de convergence additionnelle permettant le refroidissement partiel du bondon acheminé au travers de la buse de convergence centrale.

Ce dispositif présente l'avantage de permettre que le bondon de détergent qui forme le motif incrusté présente une consistance sensiblement plus dure que la pâte qui vient l'enrober, et d'éviter ainsi la déformation possible du motif incrusté sous l'effet de la pression exercée sur le bondon qui le constitue par la pâte qui l'enrobe.

Selon une variante de ce mode de réalisation, la matrice qui assure la formation du motif incrusté et qui se trouve disposée à l'extrémité de la buse additionnelle présente à son extrémité, sur tout son périmètre, un rebord de section triangulaire positionné en divergence par rapport à la convergence de ladite buse, afin de former un redan qui joue le rôle de déflecteur, permettant d'éviter que la pression de la pâte d'enrobage ne s'exerce immédiatement au droit de la filière, et empêchant ainsi l'écrasement des contours du bondon constituant le motif d'incrustation.

On comprendra mieux l'objet de la présente demande au vu de la description non limitative qui suit et qui se rapporte aux dessins annexés, parmi lesquels :

- La figure 1 représente en perspective un appareil à extruder selon invention à trois postes d'extrusion.

- La figure 2 représente, vu du dessus, une coupe de l'appareil selon le premier mode de réalisation décrit ci-dessus.

- La figure 3 représente en perspective, avec coupe partielle, un appareil comportant une buse principale à triple entrée et une buse additionnelle destinée à réaliser un motif décoratif.

- La figure 4 représente le rebord déflecteur de l'extrémité de la buse additionnelle.

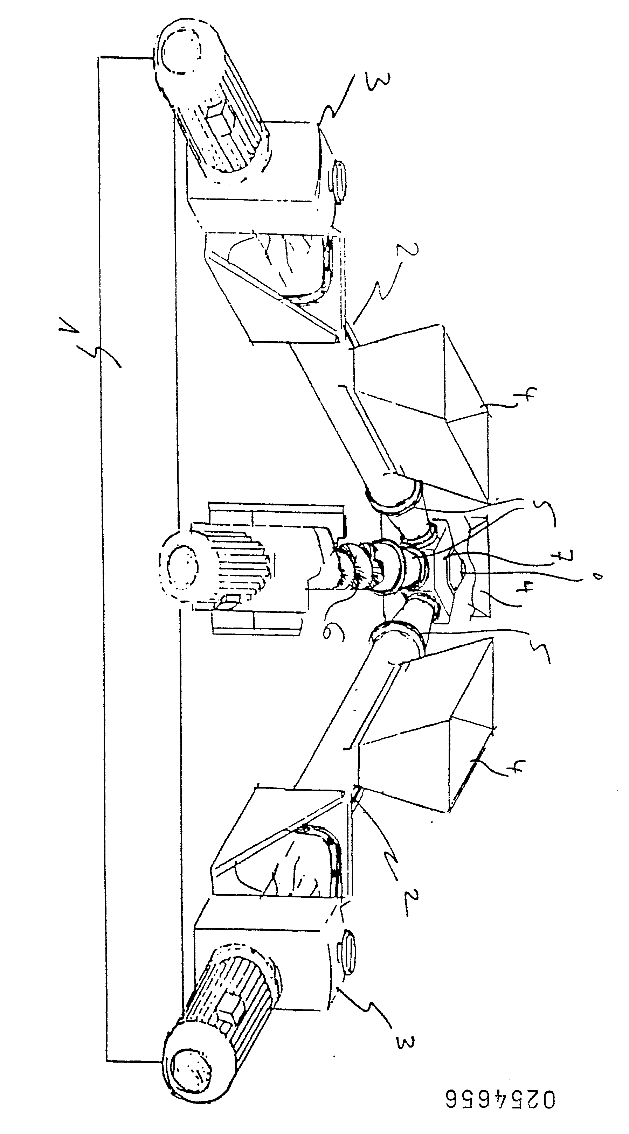

En se reportant à la figure 1, on constate que la machine est constituée d'un bâti (1) sur lequel sont boulonnés trois moto-réducteurs-variateurs de vitesse pour entraîner chaque vis d'Archimède (6) de chaque extrudeuse (2) surmontée d'une trémie (4) ; à l'extrémité de chaque extrudeuse se trouve fixée par boulonnage une buse de convergence (5) fixée à son autre extrémité sur une pièce prismatique (7) appelée buse principale. Une buse terminale (8) permet l'éjection du bondon formé de la réunion des bondons primaires acheminés par les buses de convergence.

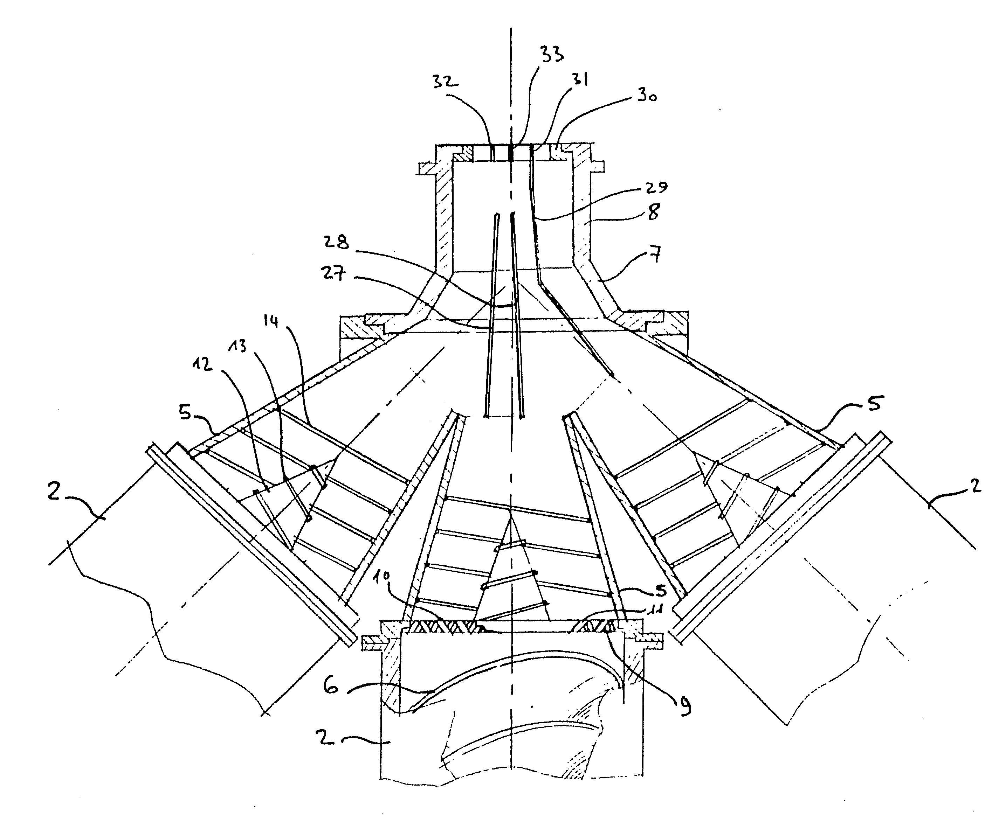

En se reportant à la figure 2, on retrouve les vis d'Archimède (6) et les extrudeuses (2) prolongées par les buses de convergence (5). Chaque buse de convergence (5) est équipée à son entrée d'une grille circulaire (9) de distribution et de répartition du produit détergent à travers des perforations obliques (10) et (11). Une pièce conique (12) est fixée sur la grille (9), au centre de cette grille, et munie d'une nervure spiralée (13) dont le pas est inverse de celui de la nervure spiralée (14) qui garnit la paroi interne de la buse de convergence (5). Les buses de convergence (5) débouchent dans la buse principale (7) prolongée par une buse terminale (8) cylindrique, un jeu de lames (27), (28) et (29) constituant la filière, qui débouche sur une plaque d'extrusion (30) munie de lamelles (31), (32) et (33) prolongeant la filière.

Dans le cas où l'on désire que le bondon central forme un motif bien précis, les lames (27) et (28) sont d'une forme appropriée correspondant à ce motif. Le bondon central passant entre ces lames prend la forme désirée, de même que les bondons adjacents passant à l'extérieur, ce qui assure la cohésion du bondon final.

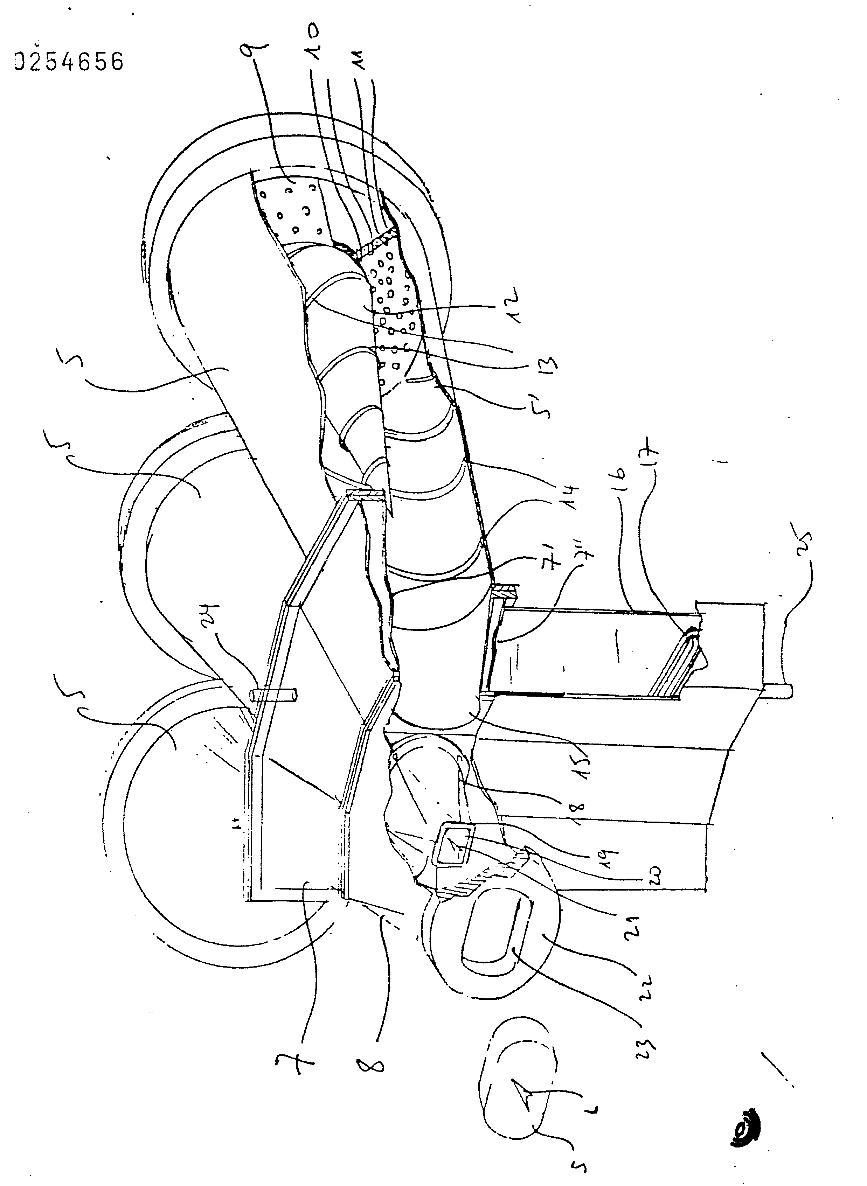

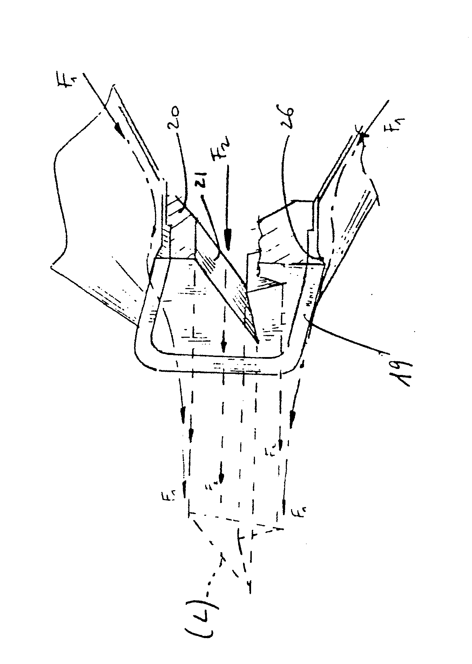

La figure 3 représente l'ensemble des trois buses de convergence (5) reliées à une buse (7), dite principale, qui présente une double paroi (7') et dont la partie inférieure se prolonge par un réservoir (16) rempli d'huile et équipé d'une canne chauffante (17) et d'une vidange (25) tandis que sa partie supérieure comporte un remplissage (24). Chaque buse de convergence est équipée à son entrée d'une grille circulaire (9) de distribution et de répartition du produit détergent à travers des perforations obliques (10) et (11). Une pièce conique (12), centrée sur la grille (9), est munie d'une nervure spiralée (13) dont le pas est inverse à la nervure spiralée (14) garnissant la paroi interne de la buse de convergence (5). Les buses de convergence (5) débouchent dans la buse principale (7), de forme extérieure prismatique et à double paroi (7') dont le col (15) est de diamètre inférieur à celui de la buse de convergence (5). La double paroi (7') possède des évidements (7") permettant le passage de l'huile chaude contenue dans le réservoir (16). En aval de la buse principale (7), une seconde buse (8) dite de liaison concentre les différentes pâtes venant des extrudeuses. L'extrémité (22) porte une filière (23). Disposée concentriquement à cette buse (8) une buse de convergence additionnelle (18) est montée dans l'axe de la buse de convergence centrale (5) et présente à son extrémité un rebord (19) de forme rectangulaire dont le pourtour est en forme de redan, selon le détail donné par la figure 4. Cette bride (19) maintient en position une filière (20) dans laquelle on a pratiqué une découpe en forme (21) du logo (L) à incorporer dans le pain de savon (S).

Ainsi qu'il a été dit plus haut, l'homogénéisation des pâtes de détergent introduites dans les extrudeuses est obtenue grâce à l'orientation préférentielle des trous (10)-(11) percés dans la grille (9) d'entrée des buses de convergence (5), cette orientation étant telle que les fils de pâte de détergents soient dirigés vers les premiers filets des rampes spiralées (13)-(14) qui garnissent la pièce conique centrale (12) et la paroi interne (5') desdites buses (5). La progression de la pâte le long de ces rampes s'effectue selon un mouvement tourbillonnaire qui favorise le mélange des fils de pâte et qui est accentué par le fait que la rampe spiralée (13) de la pièce conique centrale (12) est à pas inverse de la rampe spiralée (14) de la paroi interne (5') de la buse de convergence (5).

La pâte sortant des buses de convergence (5) se trouve réchauffée lors de son passage par la buse principale (7), ce qui entraîne son ramollissement et améliore la cohésion entre les bondons primaires au moment de leur juxtaposition au niveau des filières.

Das le cas où l'on veut réaliser un motif incrusté aux contours nets, l'adjonction de la buse additionnelle (18) portant à son extrémité la filière (20) découpée à la forme voulue permet l'obtention d'un bondon central sensiblement plus ferme que les bondons adjacents, qui viennent glisser le long de la paroi extérieure de la buse (18). Le rebord (19) ménagé à l'extrémité de la buse (18) formant un redan (26) dont la pente est orientée à l'encontre du sens de progression de la masse pâteuse, dérive le flux pâteux au-delà de la bouche de la filière (20), évitant l'écrasement du bondon central mis en forme par la filière (20). Les bondons réunis dans la buse terminale (8) sont ensuite acheminés vers la sortie de la buse (8) équipée d'une filière (23) d'ébauche du contour du bondon final.

La figure 4 montre en détail la position du redan (26) sur le pourtour de la bride (19) maintenant en position la filière (20) et sa découpe en forme (21). Les flèches $F_1$ montrent, suivant la ligne en traits mixtes, la progression de la masse pâteuse constituant le pain de savon tandis que les flèches $F_2$ montrent suivant la ligne en tirets la progression de la pâte colorée qui forme le logo (L).

Le bondon produit par l'appareil qui fait l'objet de l'invention est ensuite soumis aux opérations classiques que l'on trouve en fin des chaînes de fabrication de pains de savon, à savoir un tronçonnage suivi d'un modelage obtenu par exemple par trappe dans des matrices de finition.

Les pains de savon à motif incrusté ainsi obtenus présentent la particularité et l'avantage que ledit motif y demeure présent tout au long de l'utilisation de ce savon et quel que soit son degré d'usure.

Il est évident que le procédé et l'appareil qui font l'objet de la présente invention peuvent subir certaines modifications, en particulier du nombre d'extrudeuses mises en oeuvre, sans pour autant sortir du cadre de l'invention.

## Revendications

1) Procédé pour la production en continu de bondons de détergents constitués par la réunion d'au moins deux bondons primaires de couleurs différentes, caractérisé en ce que les pâtes de détergent sont acheminées par des extrudeuses, au travers de grilles perforées dans des buses de convergence prolongées par au moins une buse assurant la juxtaposition des bondons primaires avant leur passage à travers la filière de sortie du bondon final.

2) Procédé selon la revendication 1, caractérisé en ce que les buses de convergence sont équipées de moyens permettant d'améliorer l'homogénéisation des pâtes de détergent, ces moyens consistant en des rampes spiralées ménagées à la surface interne desdites buses, et de pas inverse à celui de rampes spiralées ménagées à la surface externe de cônes pleins fixés au centre des grilles perforées.

3) Procédé selon la revendication 1 ou la revendication 2, caractérisé en ce que les buses de convergence sont prolongées par une buse principale munie de lames permettant de donner aux bondons primaires les formes désirées, lesdites lames étant situées entre les sorties des buses de convergence et la filière de sortie du bondon final.

4) Procédé selon la revendication 1, caractérisé en ce que les buses de convergence sont prolongées par une buse principale munie d'une double enveloppe contenant un liquide chaud et elle-même prolongée par une buse terminale munie d'une filière de sortie du bondon final.

5) Procédé selon la revendication 4, caractérisé en ce qu'une buse additionnelle est montée sur la buse principale, en avant de ladite buse, cette buse additionnelle acheminant, à travers une filière ménagée à son extrémité, le bondon destiné à former un motif décoratif incrusté dans le bondon final.

6) Procédé selon la revendication 5, caractérisé en ce que la buse additionnelle présente à son extrémité un rebord formant un redan dont la pente est orientée à l'encontre du sens de progression des bondons.

7) Appareil pour la mise en oeuvre du procédé qui fait l'objet de la revendication 3, caractérisé en ce qu'il comprend, reliés à des extrudeuses (2), au moins deux buses de convergence (5) munies à leur surface inférieure de rampes spiralées (14) et dont l'entrée est munie d'une grille (9) perforée de trous obliques (10) et (11) et supportant en son centre une pièce conique (12) comportant à sa surface une rampe spiralée (13) ; une buse principale (7) équipée de lames (27), (28) et (29) le long desquelles les bondons primaires sont acheminés vers une filière (30) munie de lamelles (31), (32) et (33) prolongeant les lames (27), (28) et (29).

8) Appareil pour la mise en oeuvre du procédé qui fait l'objet des revendications 4 à 6, caractérisé en ce qu'il comprend, reliées à des extrudeuses (2), au moins deux buses de convergence (5) dont l'entrée est munie d'une grille (9) perforée de trous obliques (10) et (11) et supportant en son centre une pièce conique (12) comportant à sa surface une rampe spiralée (13) qui est à pas inverse de celui de la rampe spiralée (14) dont est munie la surface intérieure des buses (5) ; une buse principale (7) à double paroi (7'), dans laquelle débouchent les buses (5), un liquide chaud, contenu dans un réservoir (16) prolongeant la double paroi (7'), circulant à l'intérieur de cette double paroi (7') ; une buse additionnelle (18) montée en avant de la buse principale (7) dans l'axe de la buse de convergence centrale (5) et présentant à son extrémité une filière (20) et un rebord (19) dont le pourtour est en forme de redan (26) dont la pente est orientée à l'encontre du sens de progression des bondons ; une buse terminale (8) réunissant les bondons des buses (7) et (18) et équipée d'une filière (23) d'ébauche du contour du bondon final.

9) Les bondons de détergent obtenus selon le procédé et à l'aide de l'appareillage qui font l'objet des revendications précédentes.

10) Les pains de détergent obtenus par tronçonnage et moulage des bondons qui font l'objet de la revendication 9.

0254656

0254656

- 4 -